# EUROPEAN PATENT APPLICATION

(11) **EP 4 357 614 A1**
(43) Date of publication of application: **24.04.2024**
(21) Application number: 22202100.8
(22) Date of filing: 18.10.2022
(51) Int. Cl.: F03D 80/00

(54) **PRESTRESSING DEVICE, AND A RELATED ARRANGEMENT, WIND TURBINE, AND METHOD**

(71) Applicant: Siemens Gamesa Renewable Energy A/S, 7330 Brande (DK)
(72) Inventor: Kondoju, Naresh Kumar, 7430 Ikast (DK); Mortensen, Kenneth Oestergaard, 7100 Vejle (DK); Quinn, Thomas F., Oviedo, 32765 (US)
(74) Representative: SGRE-Association

(57) **Abstract**

Prestressing device designed to be inserted into a hole (7) in a component (8) to suppress an ovalization of the hole (7) when the component (8) is loaded, wherein the prestressing device (1) comprises a sleeve (6) and a tensioning mechanism (9), wherein the prestressing device (1) is designed to be inserted into the hole (7) along an insertion axis (10), wherein the tensioning mechanism (9) is designed to deform the sleeve (6) in such a way, that the diameter (11) of the outer surface (12) of the sleeve (6) in the radial direction with respect to the insertion axis (10) can be increased from a first diameter to a second diameter in at least one axial section of the sleeve (6) by actuating the tensioning mechanism (9), allowing the outer surface (12) of the sleeve (6) to exert a force (13) in the radial direction onto the surface (14) of the component (8) delimiting the hole (7) and therefore prestressing the component (8), when the axial section of the sleeve (6) is arranged in the hole (7) and the diameter (37) of the hole (7) prior to the actuation of the tensioning mechanism (9) is lower than the second diameter.

## Description

The invention concerns a prestressing device designed to be inserted into a hole in a component to suppress an ovalization of the hole when the component is loaded. Additionally, the invention concerns an arrangement, a wind turbine, a method for providing electrical energy, a method for closing a hole in a component and a method for servicing a device.

During the construction and/or during servicing of a device it can be necessary to use holes in a component to access certain parts of the device and/or to handle the component and/or attached further components. Holes for these purposes can already be present in a component or they can be drilled for that purpose. Such holes can, e.g., be plain holes or threaded holes.

A drawback of having holes in a component is the possible ovalization of such a hole when the component is stressed which can lead to high peak forces in the vicinity of the hole. This is, e.g., highly relevant in components in wind turbines or in other components that are subject to large and/or strongly varying loads.

Up to now these issues were handled by either using a stronger component, which can notably increase the weight and cost of the component, especially for large components like bearing support plates in wind turbines. Additionally or alternatively, additional stiffening structurers can be used to reduce the load on the component itself. This approach does however also lead to an increase in cost in weight and can require additional installation space. In some cases, peak loads can also be reduced by increasing the diameter of a hole. This approach does however not work in all used cases and can potentially further reduce the overall load bearing capacity of the component, therefore potentially requiring additional measures.

The invention is therefore based on the problem of providing an improved approach for handling holes in components.

The problem is solved by a prestressing device designed to be inserted into a hole in a component to suppress an ovalization of the hole when the component is loaded, wherein the prestressing device comprises a sleeve and a tensioning mechanism, wherein the prestressing device is designed to be inserted into the hole along an insertion axis, wherein the tensioning mechanism is designed to deform the sleeve in such a way, that the diameter of the outer surface of the sleeve in the radial direction with respect to the insertion axis can be increased from a first diameter to a second diameter in at least one axial section of the sleeve by actuating the tensioning mechanism, allowing the outer surface of the sleeve to exert a force in the radial direction onto the surface of the component delimiting the hole and therefore prestressing the component, when the axial section of the sleeve is arranged in the hole and the diameter of the hole prior to the actuation of the tensioning mechanism is lower than the second diameter.

The invention is based on the idea of prestressing the material of the component in the area surrounding the hole in such a way that peak loads that otherwise result in the vicinity of the hole, especially due to an ovalization of the hole, can be at least partially compensated. Since the peak loads are lowered by this approach, the initially discussed need for a stronger component to compensate for the presence of the hole and/or the use of additional support and/or stiffening structures can be avoided or at least reduced. Therefore, the invention allows the use of components having holes with a lower weight, cost and installation space requirement than typically achieved in the prior art.

According to simulations, a noticeable increase in lifetime of components due to the use of the prestressing device according to the present invention is expected. In an exemplary simulation, rather high peak forces due to the presence of a hole that would lead to a very short lifetime were lowered by using by using the prestressing device according to the present invention sufficiently to allow for a lifetime of more than 20 years.

The inventive approach of prestressing the component by using the prestressing device can in principle be used for arbitrarily shaped holes. Preferably the sleeve and tensioning mechanism are designed in such a way, that a variation of the force on the surface of the component delimiting the hole along the circumference of the hole varies by less than 20 % of the average force. The inventive approach is however especially useful for at least approximately circular holes. In this case the prestressing device can be designed to provide forces with at least approximately rotational symmetry. This allows for a relatively simple design and a low cost of the prestressing device.

The tensioning mechanism can comprise at least one inset element that is arranged at least partially in an interior space of the sleeve, wherein an outer surface of the inset element contacts an inner surface of the sleeve in a respective contact area, wherein the diameter of the inset element in the radial direction increases continuously and/or the diameter of the interior space in the radial direction decreases continuously along the axial direction in at least one respective direction from the respective contact area.

Using the described geometry, the insert element can exert a force on the inner surface of the sleeve when pushed in the axial direction, therefore deforming the sleeve to widen its diameter and therefore to exert a force on the surface of the component delimiting the hole. The insert element and the sleeve can preferably have a rotational symmetry with respect to the insertion axis. Preferably, the diameter of the interior space can decrease in a first direction and the diameter of the insert can increase in an opposite second direction. When the insert is pushed in the first direction in this case, the sleeve is deformed, and its diameter spread.

In principle it is sufficient, when either the diameter of the inset or the diameter of the interior space varies. E.g., the inset can in principle be a straight rod or the sleeve can have straight inner walls. Preferably, both the diameter of the inset and the diameter of the interior space vary. This can allow for a larger contact area between these components, leading to a lower force density when the inset is used to deform the sleeve.

At least the section of an inner surface of the sleeve and/or of the outer surface of the inset element forming the respective contact area can be formed as the shell of a truncated cone. When the areas of the inner surface of the sleeve and of the outer surface of the inset element both form a shell of a truncated cone, these surfaces can have matching slopes or in other words angles towards the insertion axis allowing for a large contact area.

The tensioning mechanism can comprise two of the inset elements arranged in the interior space of the sleeve, wherein clamping means of the tensioning mechanism are designed to push to two inset elements towards each other in the axial direction to increase the diameter of the outer surface of the sleeve when the clamping means are actuated. Preferably, the two inset elements can be pushed towards the center of the prestressing device in the axial direction and/or the center of the axial section of the sleeve designed to contact the surface of the component delimiting the hole. By using two insets, that are pushed from both directions into the interior space of the sleeve, both ends of the sleeve in the axial direction can be widened to approximately the same degree, therefore ensuring that the overall stress generated by the prestressing device is essentially completely directed in the radial direction.

The clamping means can be or comprises a screw that extends along the insertion axis through an opening of the first one of the inset elements and into or through an opening of a second one of the inset elements and that engages a thread of a counter component, especially a nut, or the second inset element.

The design of the prestressing device can be especially simple, when the prestressing device is to be used in a hole that can be accessed from both sides when installing the prestressing device. The counter component or the second inset element providing the thread that engages the screw can then be manually held and the screw can be turned for actuating the clamping means or vice versa. Preferably, the screw is tightened until a given torque threshold is reached that can, e.g., be precalculated to achieve a desired strength of the prestressing. When the screw is manually tightened this can, e.g., achieved by using a torque wrench. Alternatively, various methods for automatically tightening a screw are known form the prior art.

The prestressing device can also be designed for use cases that allow access to the hole from only one side when installing the prestressing device. A turning of the counter component or the second inset element against the sleeve can be blocked by appropriate means, e.g., by interacting ridges and notches along the interacting surfaces of the sleeve and the second inset element, that can, e.g., run at an angle, especially orthogonal, to the circumferential direction. Similar means can be used to block a relative movement of the screw or the counter component with respect to a neighboring inset element and/or the sleeve. An accessible end of the sleeve can be shaped in such a way to provide a point of action for a spanner or a similar device for blocking the rotation of the sleeve with respect to the hole. It is also possible that the friction between the different components is sufficient to block any unwanted relative rotations when tightening the screw.

In principle the head of a screw and the counter component, especially a nut, can directly be used to exert a force on the axial end face of the respective inset element. It can however be advantageous to use a respective washer between the screw head or the nut and a respective inset element to, e.g., achieve a more even distribution of the clamping forces.

The sleeve and the at least inset element can be formed from the same material. The material of the sleeve and/or of the inset element can especially be the same material as the material of the component. In this case the behavior of the component without the presence of the hole can be closely approximated by using the prestressing device and/or temperature changes do not noticeably change the prestressing of the component by the prestressing device. Preferably, all parts of the prestressing device can be formed from the same material.

The sleeve can be formed as a hollow cylinder with a continuous outer surface in the circumferential direction with respect to the insertion axis. It is advantageous when a sleeve without a slit or at least without a slit extending over the full axial length of the sleeve is used. Using a sleeve with a slit would lead to a reduction of the rotational symmetry of the sleeve and therefore of the distribution of the prestress and could therefore increase the risk of ovalization of the hole for some loads.

Besides the prestressing device the invention concerns an arrangement comprising a component having a hole and a prestressing device according to the present invention arranged in the hole in such a way that the outer surface of the sleeve of the prestressing device exerts a force onto the surface of the component delimiting the hole, thereby prestressing the structure. The advantages of such an arrangement were already discussed with respect to the prestressing device according to the present invention.

The invention also concerns a wind turbine comprising at least one arrangement according the present invention.

In a preferred embodiment the component forms a support plate for a blade bearing in a hub of a wind turbine. This use case is especially relevant since notable stress can be introduced into such a support plate when a bending moment is exerted on the blade. Since bending moments on the rotor blades typically vary strongly over the lifetime of the wind turbine, this can lead to large and strongly variable peaks of stress in the area of the hole that can be lowered using the prestressing device. At the same time certain servicing tasks for a wind turbine might require the presence or the drilling of a hole in such a support plate, e.g., for mounting at least one hydraulic jack or some other tool for lowering the respective blade.

Other components of a wind turbine, for which the use of the discussed prestressing device or the methods discussed below are potentially advantageous, are the tower, e.g. the outer wall of a steel tower, or structures in the nacelle or the hub.

The invention also concerns a method for providing electrical energy to an electricity grid, comprising the steps of:
- generating electrical energy by a generator of the wind turbine according to the present invention,
- transmitting the electrical energy through a cable from an offshore location of the wind turbine to an electric receiver station, preferably positioned in an area not belonging to international waters, and
- transmitting the electrical energy from the electric receiver station into an electricity grid.

Due to the typically rather large size of offshore wind turbines and of the turbine blades used in such wind turbines, avoiding load peaks in the area of holes used for servicing can be especially relevant in these cases.

The invention also concerns a method for closing a hole in a component, comprising the of steps of:
- inserting the prestressing device according to the present invention into the hole along the insertion axis of the prestressing device, and
- actuating the tensioning mechanism of the prestressing device to deform the sleeve, thereby pushing the outer surface of the sleeve against the surface of the component delimiting the hole to exert a force in the radial direction onto the surface of the component delimiting the hole, thereby prestressing the component.

The insertion axis can preferably be approximately orthogonal to the surface of the component comprising the hole. Advantages of this method for closing a hole were already discussed with reference to the prestressing device according to the present invention.

The invention also concerns a method for servicing a device, especially for servicing a wind turbine, that comprises a component, comprising the steps:
- drilling at least one hole into the component,
- inserting the prestressing device according to the present invention into the hole along the insertion axis of the prestressing device, and
- actuating the tensioning mechanism of the prestressing device to deform the sleeve, thereby pushing the outer surface of the sleeve against the surface of the component delimiting the hole to exert a force in the radial direction onto the surface of the component to limiting the hole, thereby prestressing the component.

The method can be especially used for servicing a wind turbine. The holes can especially be useful for lowering rotor blades of the wind turbine. Preferably, the hole is used for another purpose prior to the insertion of the prestressing device, e.g., to attach a tool.

The method can therefore preferably comprise the additional steps, performed prior to the insertion of the prestressing device into the hole, of
- using the hole to connect a hydraulic jack to the component,
- actuating the hydraulic jack to move the component and preferably at least one further component of the device, and
- disconnecting the hydraulic jack from the hole.

The further component can, e.g., be a rotor blade as discussed above. In this case, the component can especially be the support plate of the blade bearing.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an exemplary embodiment of a prestressing device according to the present invention,
- Fig. 2: an exemplary embodiment of arrangement according to the present invention,
- Fig. 3: an exemplary embodiment of a wind turbine according to the present invention,
- Fig. 4: a detailed view of the wind turbine shown in fig. 3,
- Fig. 5: a flow chart of an exemplary embodiment of the method for servicing a device according to the present invention, comprising an exemplary embodiment of the method for closing a hole in a component according to the present invention,
- Fig. 6: an exemplary embodiment of the method for providing electrical energy to an electricity grid according to the present invention, and
- Fig. 7: simulation results showing the influence of an exemplary embodiment of a prestressing device according to the present invention on the stress within a component.

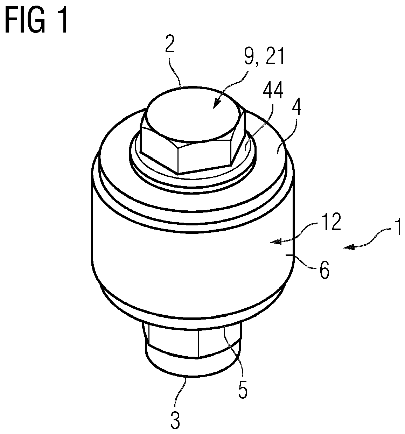

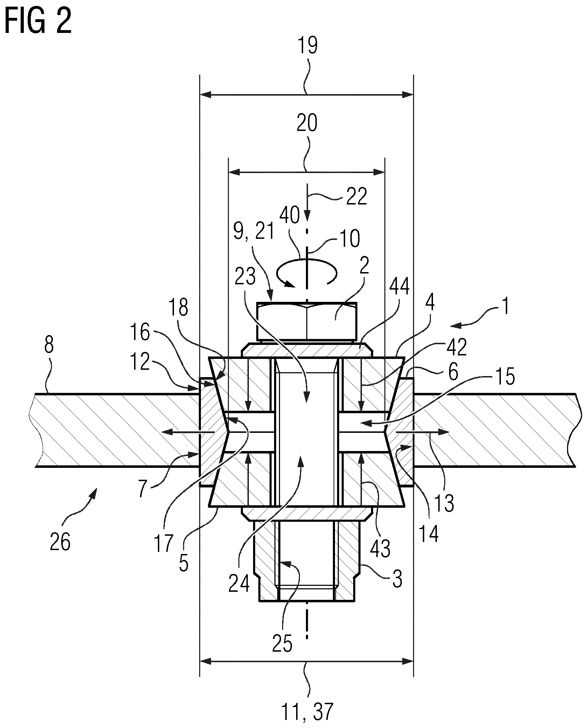

Fig. 1 shows a prestressing device 1 designed to be inserted into a hole in a component to suppress an ovalization of the hole when the component is loaded. The function of the prestressing device 1 will be discussed in conjunction with fig. 2 that shows the use of this prestressing device 1 in an arrangement 26 comprising the prestressing device 1 and the component 8.

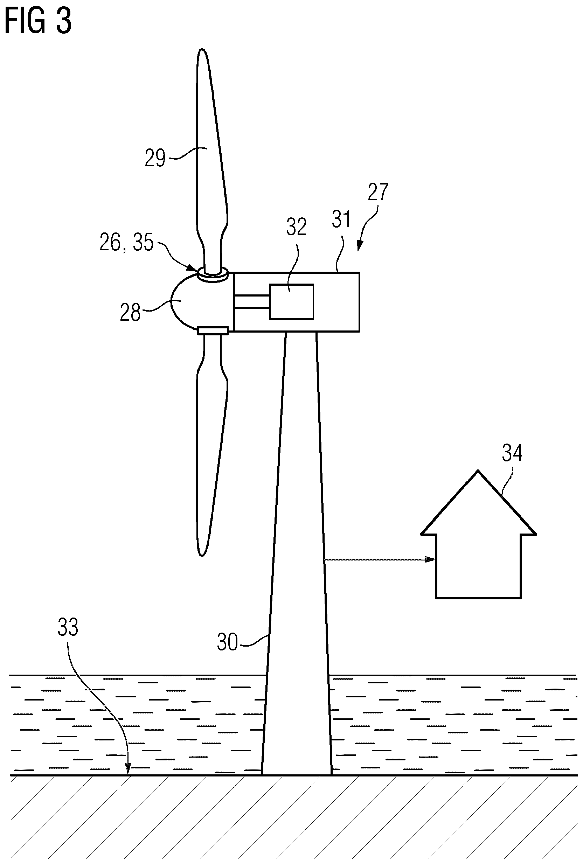

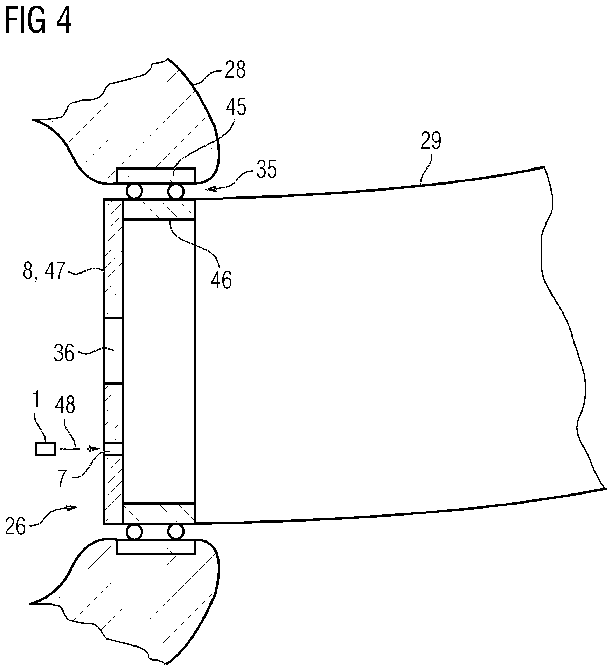

As already discussed in detail in the general part of the description, the purpose of the prestressing device 1 is to apply a force 13 to the surface 14 of the component 8 delimiting the hole 7 and therefore prestressing the component 8 to counteract the presence of peak loads in the vicinity of the hole when the component 8 is loaded. A hole in the component might, e.g., be necessary to handle the component or a further component attached to this component during the construction of a device, e.g., a wind turbine, and/or during servicing. An exemplary use of the prestressing device in a wind turbine 27 and more specifically in a support plate of a blade bearing will later be discussed with reference to the figures 3 and 4.

The prestressing device 1 comprises a sleeve 6 and a tensioning mechanism 9. The prestressing device 1 can be inserted along an insertion axis 10 into a hole 7 of the component 8 as shown by the arrow 22 in fig. 2. The insertion axis 10 can be the same as the longitudinal axis in axial direction of the prestressing device (1) and/or as a longitudinal axis of the hole 7. An initial diameter 11 of the outer surface 12 of the sleeve 6 is chosen to be approximately the same as the diameter 37 of the hole 7 or preferably a bit smaller to allow an insertion of the prestressing device 1 into the hole with little to no friction.

Once the position shown in fig. 2 is reached, the tensioning mechanism 9 of the prestressing device 1 is actuated, thereby increasing the diameter 11 of the outer surface 12 of the sleeve 6. As soon as the diameter 11 of the outer surface 12 reaches the diameter 37 of the hole 7, a further expansion of the diameter is only possible by slightly deforming the component 8 in the vicinity of the hole 7 by exerting a force 13 in the radial direction onto the surface 14 of the component 8 delimiting the hole 7 and therefore by prestressing the component 8.

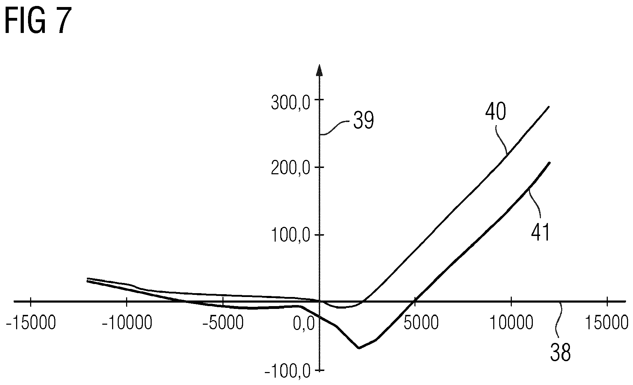

It was found in experiments and during simulations, that the peak stress in positions close to the hole can be notably reduced by using such a prestressing device. Exemplary results are shown in fig. 7, wherein the effect of a hole in a support plate of a blade bearing on the stress within such a component is simulated, wherein the x-axis 38 shows the bending moment of the blade in kNm and the y-axis 39 shows the equivalent stress in MPa close to the hole. The curve 40 shows the resulting stress when the hole is open and the curve 41 shows the stress once a prestressing device 1 is inserted in the hole and the tensioning mechanism 9 is adjusted. As shown in fig. 7, the stress in positions closed to the hole can be lowered by approximately 100 MPa for the problematic large positive bending moments on the blade. This reduction of internal stress can notably extend the lifetime of such a component.

Returning to figures 1 and 2, the advantageous tensioning mechanism 9 used in the example will now be discussed in detail. The tensioning mechanism 9 comprises two inset elements 4, 5 that are arranged partially in the interior space 15 of the sleeve 6. The diameter 19 of the inset elements 4, 5 and the diameter 20 of the interior space 15 both vary along the insertion axis 10. More specifically the outer surface 16 of the inset elements 4, 5 and the respective section of the inner surface 17 of the sleeve 6 forming the contact area 18 for contacting the outer surface 16 of the respective inset elements 4, 5 are formed as the shell of a truncated cone. Due to this shape, the sleeve 6 is widened in radial direction X when pushing the inset elements 4, 5 toward each other in radial direction as shown by the arrows 42, 43 in fig. 2. The chosen geometry also allows for a large contact area 18 between the respective inset element 4, 5 and the sleeve 6, therefore decreasing the force density in the contact area 18 when the prestressing device 1 is used to exert the force 13.

The tensioning mechanism 9 includes clamping means 21 that are used to exert a force in the axial direction pushing the inset elements 4, 5 towards each other. In the example the clamping means 21 are implemented by feeding a screw along the insertion axis 10 through openings 23, 24 of the inset elements 4, 5. The screw 2 engages the thread 25 of a counter component 3, that is formed as a nut in the example. In alternate embodiments different counter components 3 could be used or a thread formed by the inset element 5 could be used. The clamping force can therefore be exerted by tightening the screw 2, as indicated by the arrow 40 in fig. 2. To allow for a more even distribution of the clamping force, washers 44 are used in the example between the head of the screw 2 and the inset element 4 and between the nut and the inset element 5.

As discussed in detail in the general part of the description, it is advantageous to use the prestressing device 1 in a wind turbine. An example of such a wind turbine 27 is shown in fig. 3. The wind turbine 27 in the example is an offshore wind turbine anchored to the seafloor 33. The discussed features could however also be used in a land-based wind turbine or any other kind of wind turbine. In principle any component of the wind turbine, e.g., a metal tower 30, the nacelle 31 or the hub 28 could have a hole and it could be advantageous to use a previously discussed prestressing device 1 in this hole.

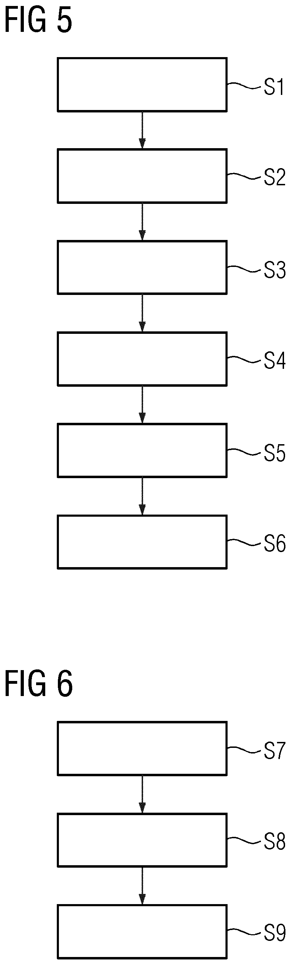

The following discussion will however focus on the use of the prestressing device 1 in the arrangement 26, namely in a bearing for connecting the blades 29 of the wind turbine 27 to the hub 28. The arrangement 26 and the surrounding parts of the hub 28 and the rotor blade 29 are schematically shown in fig. 4. The bearing 35 comprises an outer ring 45 attached to the hub 28 and an inner ring 46 attached to the rotor blade 29. The inner ring 46 is supported by bearing a support plate 47 that forms the component 8. For certain tasks, e.g., for servicing the wind turbine, it can be necessary to drill a hole 7 into the component 8, as will be later discussed later with reference to fig. 5. To avoid high peak stress levels in the area surrounding the hole 7 due to an ovalization of the hole 7, the prestressing device 1 can be inserted into the hole 7 as shown by the arrow 48 in fig. 4 and actuated to prestress the component 8. This was already discussed in detail above.

In the example the hole 36 in the component allows for an easy access to the prestressing device 1 from both sides once it is inserted in the hole 7. It is therefore possible, to securely hold the nut while turning the screw 2 or vice versa. Approaches for modifying the prestressing device 1 in such a way, that an actuation of the tensioning mechanism 9 would be possible from only one side, e.g., if the hole 36 would not be available, were already discussed in the general part of the description.

Fig. 5 shows a flowchart for a method for servicing a device, in the example for servicing a wind turbine. In step S1 a hole is drilled into the component 8, e.g., into the support plate 47 of a blade bearing. This hole 7 can, e.g., be required for certain tasks during servicing. An exemplary use of such a hole 7 will be discussed with reference to the steps S2 to S4, but these steps could also be replaced by different servicing steps using the hole.

In step S2 the hole is used to connect a hydraulic jack to the component 8. This hydraulic jack is then used in step S3 to move the component 8 and preferably a further component of the device connected to the component, in the example the wind turbine blade attached to the inner ring of the blade bearing. This can, e.g., be used to lower the blade for servicing purposes using the hydraulic jack.

In step S4 the hydraulic jack is disconnected, therefore leaving the hole 7 open.

In step S5 the prestressing device 1 is inserted into the hole 7 and in step S6 the tensioning mechanism 9 of the prestressing device 1 is actuated to deform the sleeve 6 and therefore prestress the component 8, as already discussed in detail with reference to the figures 1 and 2.

In some use cases the hole 7 might already be present and it might only be required to close the hole 7 in the component 8. In this case the steps S5 and S6 can be performed in isolation.

Fig. 6 shows a flowchart of a method for providing electrical energy to an electricity grid. This method will be discussed in conjunction fig. 3. In step S7 the generator 32 of the wind turbine 27 is used to generate electrical energy.

The wind turbine 27 is an offshore wind turbine and the electrical energy can be transmitted through a cable (not shown) from the offshore location of the wind turbine 27 to an electric receiver station 34 in step S8.

In step S9 the electrical energy is transmitted from the electric receiver station into an electricity grid (not shown).

Although the present invention has been described in detail with reference to the preferred embodiment, the present invention is not limited by the disclosed examples from which the skilled person is able to derive other variations without departing from the scope of the invention, e.g., the use of a thread 25 in the inset element 5 to hold the screw while the prestressing device 1 is used to prestress a section of a metal tower.

## Claims

1. Prestressing device (1) designed to be inserted into a hole (7) in a component (8) for mitigating and/or suppressing a deformation and/or an ovalization of the hole (7) and/or for reducing material tension within the surrounding of the hole (7) when the component (8) is mechanically loaded by a force applied upon the component (8),
wherein the prestressing device (1) comprises a sleeve (6) and a tensioning mechanism (9), and is designed to be inserted into the hole (7) along a longitudinal axis of the prestressing device (1), along a longitudinal axis of the hole (7) and/or along an insertion axis (10),
wherein the tensioning mechanism (9) is designed, when being actuated, to widen and/or deform the sleeve (6) such that a diameter (11) of an outer surface (12) of the sleeve (6) in a radial direction with respect to the insertion axis (10), to the longitudinal axis of the prestressing device (1), and/or to the longitudinal axis of the hole (7) is increased from a first diameter to a second diameter in at least one axial section of the sleeve (6),
and thereby, when the axial section of the sleeve (6) is arranged in the hole (7) and the diameter (37) of the hole (7) prior to the actuation of the tensioning mechanism (9) is lower than the second diameter, enabling the outer surface (12) of the sleeve (6) to exert a force (13) in the radial direction onto an inner surface (14) of the component (8) delimiting the hole (7) and therefore prestressing the component (8).

2. Prestressing device (1) according to claim 1, wherein the tensioning mechanism (9) comprises at least one inset element (4, 5) that is arranged at least partially in an interior space (15) of the sleeve (6),
wherein an outer surface (16) of the inset element (4, 5) is in direct or indirect contact with an inner surface (17) of the sleeve (6) in a respective contact area (18),
wherein the diameter (19) of the inset element (4, 5) in the radial direction increases continuously, and/or wherein the diameter (20) of the interior space (15) in the radial direction decreases continuously along the axial direction and/or in direction of the insertion axis (10) in at least one respective direction from the respective contact area (18).

3. Prestressing device (1) according to claim 2, wherein at least a section of the inner surface (17) of the sleeve (6) and/or of the outer surface (16) of the inset element (4, 5) forming the respective contact area (18) is formed in a truncated-cone-like form.

4. Prestressing device (1) according to claim 2 or 3, wherein the tensioning mechanism (9) comprises two of the inset elements (4, 5) arranged in the interior space (15) of the sleeve (6), wherein clamping means (21) of the tensioning mechanism (9) are designed to push the two inset elements (4, 5) toward each other in the axial direction to increase the diameter (11) of the outer surface (12) of the sleeve (6) when the clamping means (21) are actuated.

5. Prestressing device (1) according to claim 4, wherein the clamping means (21) is or comprise a screw (2) which extends along the insertion axis (10) through an opening (23) of a first one of the inset elements (4, 5) and into or through an opening (24) of a second one of the inset elements (4, 5), and which engages a thread (25) of a counter component (3), in particular a nut, or the second inset element (5).

6. Prestressing device (1) according to one of the preceding claims, wherein the sleeve (6) and the at least one inset element (4, 5) are formed from the same material.

7. Prestressing device (1) according to one of the preceding claims, wherein the sleeve (6) is formed as a hollow cylinder with a continuous outer surface (12) in the circumferential direction with respect to the insertion axis (10).

8. Arrangement comprising a component (8) having a hole (7) with an inner surface (14) and a prestressing device (1) according to one of the preceding claims arranged in the hole (7) such that the outer surface (12) of the sleeve (6) of the prestressing device (1) exerts the normal force (13) onto the surface (14) of the component (8) delimiting the hole (7), thereby prestressing the component (8).

9. Wind turbine comprising at least one arrangement (26) according to claim 8.

10. Wind turbine according to claim 9, wherein the component (8) is a support plate (8) for a bearing (35) of a rotor blade of the wind turbine arranged in a hub (28) of the wind turbine (27).

11. Method for providing electrical energy to an electricity grid, comprising the steps of:
generating electrical energy by a generator (32) of the wind turbine (27) according to claim 9 or 10,
transmitting the electrical energy through a cable from an offshore location of the wind turbine (27) to an electric receiver station (34), preferably positioned in an area not belonging to international waters, and
transmitting the electrical energy from the electric receiver (34) station into an electricity grid.

12. Method for closing a hole (7) in a component (8) and/or for prestressing a component (8), comprising the steps of:
inserting the prestressing device (1) according to one of the claims 1 to 8 into the hole (7) along an insertion axis (10) of the prestressing device (1), and
actuating the tensioning mechanism (9) of the prestressing device (1) to widen and/or to deform the sleeve (6), thereby pushing the outer surface (12) of the sleeve (6) against the inner surface (14) of the component (8) delimiting the hole (7) to exert a force (13) in the radial direction onto the inner surface (14) of the component (8) delimiting the hole (7), in particular thereby prestressing the component (8).

13. Method for servicing a device, especially for servicing a wind turbine (27), that comprises a component (8), comprising the steps:
drilling at least one hole (7) into the component (8),
inserting the prestressing device (1) according to one of the steps 1 to 8 into the hole (7) along the insertion axis (10) of the prestressing device (1), and
actuating the tensioning mechanism (9) of the prestressing device (1) to deform the sleeve (6),
thereby pushing the outer surface (12) of the sleeve (6) against the surface (14) of the component (8) delimiting the hole (7) to exert a force (13) in the radial direction onto the surface (14) of the component (8) delimiting the hole (7),
thereby prestressing the component (8).

14. Method according to claim 13, comprising the additional steps, performed prior to the insertion of the prestressing device (1) into the hole (7), of:
using the hole (7) to connect a hydraulic jack to the component (8),
actuating the hydraulic jack to move the component (8) and preferably at least one further component of the device,
disconnecting the hydraulic jack from the hole (7).
